Europäisches Patentamt

European Patent Office

Office européen des brevets

(11) Veröffentlichungsnummer: **0 410 391 A2**

# (12) EUROPÄISCHE PATENTANMELDUNG

(21) Anmeldenummer: 90114185.3

(22) Anmeldetag: 24.07.90

(51) Int. Cl.⁵: **B23K 9/20**

(30) Priorität: 28.07.89 DE 3925100

(43) Veröffentlichungstag der Anmeldung:
30.01.91 Patentblatt 91/05

(84) Benannte Vertragsstaaten:
**BE DE ES FR GB IT SE**

(71) Anmelder: **TRW NELSON BOLZENSCHWEISSTECHNIK GMBH & CO. KG KG**
**Flurstrasse 7-19**
**D-5820 Gevelsberg(DE)**

(72) Erfinder: **Schwiete, Bernd**
**Himmeloh-Strasse 141**
**D-5810 Witten 7(DE)**

(74) Vertreter: **Schieschke, Klaus, Dipl.-Ing.**
**Patentanwälte Dipl.-Ing. E. Eder Dipl.-Ing. K.**
**Schieschke Elisabethstrasse 34**
**D-8000 München 40(DE)**

(54) Elektrisches Bolzenschweissgerät.

(57) Das elektrisches Bolzenschweißgerät enthält eine Schweißpistole für einen anzuschweißenden Bolzen an ein Werkstück und ein Steuergerät. Dieses besitzt eine Schweißstromquelle sowie Steller für die Schweißzeit und den Schweißstrom. Die Schweißpistole und das Steuergerät sind über zwei Schweißstromleitungen verbunden. Es ist ein nur die beiden vorhandenen Schweißstromleitungen (5, 6) benutzender Pilotstromkreis vorhanden. Ferner ist eine der Schweißpistole (3) zugeordnete Stellvorrichtung (10) vorhanden, die in diesen Pilotstromkreis eingeschaltet ist. Im Steuergerät (2) ist ein Fühler (9) vorhanden, der abhängig von den von der Stellvorrichtung (10) je nach Betätigung der daran angeordneten Stellern (13, 14) erzeugten Steuersignale die im Steuergerät vorhandene Steuervorrichtung (8) für die Schweißzeit und den Schweißstrom steuert.

FIG. 1

EP 0 410 391 A2

## ELEKTRISCHES BOLZENSCHWEISSGERÄT

Die Erfindung betrifft ein elektrisches Bolzenschweißgerät mit den Merkmalen des Oberbegriffs des Patentanspruches 1.

Ein derartiges elektrisches Bolzenschweißgerät ist bekannt. Hierbei werden Schweißstrom und Schweißzeit durch entsprechende Steller, z.B. Wahlschalter, direkt am Steuergerät entsprechend der Schweißaufgabe eingestellt. Nachteilig ist, daß bei Veränderungen der Einstellungen die Bedienungsperson jedes mal zum Steuergerät zurückkehren muß, wobei die Vorort zu benutzende Schweißpistole und das Steuergerät über eine verhältnismäßig große Strecke voneinander entfernt sein können.

Andererseits ist es bereits bekannt über sog. Fernsteuerungen die gewünschten Einstellungen am Steuergerät vorzunehmen. Nachteilig ist hierbei, daß zusätzliche Steuerleitungen erforderlich sind. Diese zusätzlichen Steuerleitungen über größere Strecken verteuern unnötig das Bolzenschweißgerät. Zudem können solche Steuerleitungen zusätzlich beschädigt werden.

Der Erfindung liegt die Aufgabe zugrunde, ein elektrisches Bolzenschweißgerät so zu verbessern, daß eine Ferneinstellung am Steuergerät ohne zusätzliche Steuerleitungen ermöglicht wird.

Die Erfindung löst diese Aufgabe mit den kennzeichnenden Merkmalen des Patentanspruches 1.

Dadurch, daß ein die Einstellung am Steuergerät bewirkender Pilotstromkreis dem Schweißstromkreis mit den beiden vorhandenen Schweißleitungen überlagert wird, entfallen zusätzliche Steuerleitungen. Über die der Schweißpistole zugeordnete Stell vorrichtung kann die Einstellung der entsprechenden Stellmittel am Steuergerät von der Schweißpistole aus bewirkt werden. Wird zusätzlich die Pilotstromkreisquelle dem Steuergerät zugeordnet, kann eine Stromquelle an der Schweißpistole vermieden werden. Hierdurch wird eine Erhöhung des Gewichts der Schweißpistole vermieden. Außerdem kann die Pilotstromquelle im Steuergerät gut überwacht werden.

Weitere Ausgestaltungen der Erfindung ergeben sich aus den Unteransprüchen.

Die Erfindung wird nachfolgend anhand von in der Zeichnung dargestellten Ausführungsbeispielen näher erläutert. In der Zeichnung zeigen:

Fig. 1 eine schematische Ansicht eines elektrischen Bolzenschweißgerätes nach der Erfindung;

Fig. 2 eine Ansicht wie in Fig. 1 einer geänderten Ausführungsform und

Fig. 3 eine Ansicht wie in Fig. 1 einer weiteren geänderten Ausführungsform.

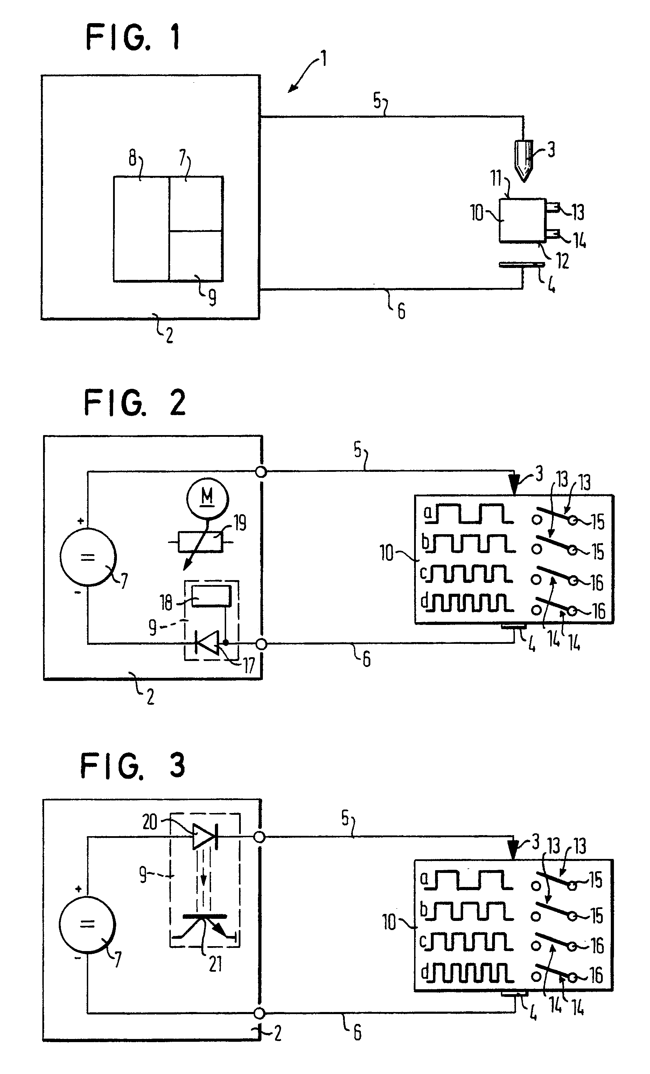

Das in Fig. 1 dargestellte Bolzenschweißgerät 1 weist ein Steuergerät 2 und eine schematisch als Bolzen dargestellte Schweißpistole 3 auf. Mittels der Schweißpistole 3 ist der von dieser gehaltenen Bolzen an einem Werkstück 4, z.B. einer Platte anzuschweißen.

Schweißpistole 3 und Werkstück 4 sind nur über zwei Schweißstromleitungen 5, 6 In Form von Kabeln verbunden.

Je nach Schweißaufgabe ist der über die Schweißstromleitungen 5, 6 fließende Schweißstrom in seiner Stärke und seiner Dauer vorzubestimmen.

Zur Einstellung des Schweißstromes und/oder der Schweißzeit weist das Steuergerät 2 neben der nichtdargestellten Schweißstromquelle eine Stromquelle 7 für einen Pilotstrom auf. Diese Stromquelle 7 ist mit den beiden Schweißstromleitungen 5, 6 verbindbar. Darüberhinaus enthält die Steuervorrichtung 8 nichtdargestellte Stellglieder für den Schweißstrom und/oder die Schweißzeit sowie einen Fühler 9, der auf den fließenden Pilotstrom anspricht.

Zur Einstellung des Schweißstromes und/oder der Schweißzeit wird zwischen der Bolzenspitze in der Schweißpistole 3 und dem Werkstück 4 eine Stellvorrichtung 10 eingesetzt. Diese Stellvorrichtung 10 besitzt an Ober- und Unterseite Kontaktflächen 11, 12. Diese können mit der Bolzenspitze eines in der Schweißpistole 3 enthaltenen Bolzens bzw. dem Werkstück 4 in galvanischen Kontakt gebracht werden.

Die Stellvorrichtung 10 besitzt mehrere von außen zugängliche und von Hand betätigbare Steller 13 und 14 für den Schweißstrom bzw. die Schweißzeit.

Die eingeschalteten Steller schalten nichtdargestellte Stellmittel in den Pilotstromkreis ein, derart, daß die Stromamplitude oder die Dauer des fließenden Stromes z.B. durch Bildung von Impulsen mit unterschiedlichen Impulsdauern und Impulspausen beeinflußt wird.

Grundsätzlich ist es auch möglich, eine Stellvorrichtung 10 mit Stellern, d.h. mit einer kleinen Stromquelle für den Pilotstrom einzusetzen, wobei dann eine Pilotstromquelle in dem Steuergerät entfallen kann.

Der Fühler 9 im Steuergerät 2 spricht auf den von den Stellern 13, 14 veränderten Pilotstrom an und bewirkt durch nichtdargestellte Mittel die Einstellung der entsprechenden Stellmittel im Steuergerät 2 für den Schweißstrom bzw. die Schweißzeit.

Bei der Ausführungsform nach Fig. 2 ist die Stellvorrichtung 10 wiederum zwischen Schweißpistole 3 und Werkstück 4 in den Pilotstromkreis eingeschaltet. Hierbei sind als Steller 13, 14 von Hand betätigbare Schalter 15, 16 verwendet, welche nichtdargestellte Elemente in einem Impulsformer schalten, wodurch unterschiedliche Pulszüge a - d entstehen. Die Pulszüge a - d weisen unterschiedliche Pulsbreiten und Pausen auf.

Die Pilotstromquelle 7 ist in diesem Fall eine Gleichstromquelle, welche einen schwachen Gleichstrom für die Stellvorrichtung 10 liefert. In den Pilotstromkreis ist im Steuergerät 2 ein Fühler 9 eingebaut, der eine Diode 17 in Stromdurchlaßrichtung enthält und angeschlossen eine Pulsfolgeerkennungsvorrichtung 18 aufweist. Diese Pulsfolgeerkennungsvorrichtung 18 steuert ein Motor-Potentiometer 19. Dieses Motor-Potentiometer 19 bewirkt in nichtdargestellter Weise die Beeinflussung des Schweißstromes, der in den zwei vorhandenen Schweißleitungen fließt, hinsichtlich seiner Stärke wie auch der Zeitdauer.

Bei der Ausführungsform nach Fig. 3 ist abweichend, daß der in den Pilotstromkreis eingeschaltete Fühler ein optoelektrischer Fühler 9 mit einer Leuchtiode 20 ist, deren Lichtstrom einen Fotohalbleiter 21 steuert. Dieser beeinflußt einen nichtdargestellten Steuerkreis im Steuergerät 2 für die Stromstärke bzw. Zeitdauer des Schweißstromes.

Wenn über die Stellvorrichtung 10 mittels des Fühlers 9 und die Steuervorrichtung 8 die entsprechende Schweißzeit und Schweißdauer eingestellt ist, wird die Stellvorrichtung 10 entfernt. Die Pistole 3 mit Bolzen wird auf das Werkstück 4 aufgesetzt. Nach Auslösen des Pistolenschalters wird der nach den genannten Größen eingestellte Schweißstrom ausgelöst.

## Ansprüche

1. Elektrisches Bolzenschweißgerät mit einer Schweißpistole für einen anzuschweißenden Bolzen an ein Werkstück und einem Steuergerät, das eine Schweißstromquelle sowie Steller für die Schweißzeit und den Schweißstrom enthält, wobei die Schweißpistole und das Steuergerät über zwei Schweißstromleitungen verbunden sind, dadurch gekennzeichnet, daß ein nur die beiden vorhandenen Schweißstromleitungen (5, 6) benutzender Pilotstromkreis vorhanden ist, daß eine der Schweißpistole (3) zugeordnete Stellvorrichtung (10) vorhanden ist, die in diesem Pilotstromkreis eingeschaltet ist und daß im Steuergerät (2) ein Fühler (9) vorhanden ist, der abhängig von den von der Stellvorrichtung (10) je nach Betätigung der daran angeordneten Steller (13, 14) erzeugten Steuersignale die im Steuergerät vorhandene Steuervorrichtung (8) für die Schweißzeit und den Schweißstrom steuert.

2. Gerät nach Anspruch 1, dadurch gekennzeichnet, daß das Steuergerät (2) eine Stromquelle (7) für einen Pilotstrom aufweist, die mit den beiden vorhandenen Schweißleitungen (5, 6) verbunden ist.

3. Gerät nach Anspruch 2, dadurch gekennzeichnet, daß die Stromquelle (7) für den Pilotstrom eine Gleichstromquelle ist.

4. Gerät nach Anspruch 1, dadurch gekennzeichnet, daß zwischen Schweißpistole (3) und Werkstück (4) eine Stellvorrichtung (10) einsetzbar ist, die für die Wahl des Schweißstromes bzw. der Schweißzeit, mehrere Steller (13) aufweist und daß diese Stellvorrichtung (10) je nach betätigten Stellern unterschiedliche Pilotströme im Pilotstromkreis erzeugt.

5. Gerät nach Anspruch 4, dadurch gekennzeichnet, daß die unterschiedlichen Pilotströme Pulszüge (a - d) sind.

6. Gerät nach Anspruch 1, 4 und 5, dadurch gekennzeichnet, daß im Steuergerät (2) ein Fühler (9) für die Pulszüge (a - d) der Stellvorrichtung (10) angeordnet ist, der über ein Motor-Stellpotentiometer (19) oder über eine fotoelektrische Vorrichtung (20, 21) die Steuervorrichtung (8) für den Schweißstrom und die Schweißzeit beeinflußt.

# FIG. 1

# FIG. 2

# FIG. 3

4